Europäisches Patentamt

European Patent Office

Office européen des brevets

(11) Veröffentlichungsnummer: **0 233 486**

**A2**

(12) # EUROPÄISCHE PATENTANMELDUNG

(21) Anmeldenummer: 87100631.8

(22) Anmeldetag: 19.01.87

(51) Int. Cl.⁴: **B60T 8/42**

(30) Priorität: 18.02.86 DE 3605057

(43) Veröffentlichungstag der Anmeldung:
26.08.87 Patentblatt 87/35

(84) Benannte Vertragsstaaten:
**AT DE FR GB SE**

(71) Anmelder: **ROBERT BOSCH GMBH**
**Postfach 50**
**D-7000 Stuttgart 1(DE)**

(72) Erfinder: **Braschel, Volker**
**Goethestrasse 1**
**D-7100 Heilbronn(DE)**
Erfinder: **Emig, Reiner, Dipl.-Ing.**
**Geislinger Weg 27**
**D-7146 Tamm(DE)**
Erfinder: **Leiber, Heinz**
**Theodor-Heuss-Strasse 34**
**D-7141 Oberriexingen(DE)**

(54) **Blockierschutzbremsanlage.**

(57) Es wird eine Blockierschutzbremsanlage (2) vorgeschlagen. Diese hat einen an Radbremsen (10, 11) endenden ersten Bremskreis (I), der an einen zweikreisigen Hauptzylinder (6) angeschlossen ist und eine Bremsdruckmodulationsventilanordnung (12) und eine Rückförderpumpe (15) besitzt. Im Blockierschutzfall wird zur Bremsdruckabsenkung Druckmittel mittels der Bremsdruckmodulationsventilanordnung (12) den Radbremsen (10, 11) entnommen und schließlich mittels der Rückförderpumpe (15) zu dem Hauptzylinder (6) zurückgeführt. Zu einem zweiten Bremskreis (II), der ebenfalls an den Hauptzylinder (6) angeschlossen ist und an Radbremsen (16, 17) endet, gehört eine an den ersten Bremskreis (I) angeschlossene Schwimmkolbenanordnung (18). Im Blockierschutzfall bewirkt eine Druckabsenkung, die mittels der Bremsdruckmodulationsventilanordnung (12) im ersten Bremskreis (I) durchgeführt wird, über die Schwimmkolbenanordnung (18) eine Druckabsenkung im zweiten Bremskreis (II).

FIG. 1

EP 0 233 486 A2

## Blockierschutzbremsanlage

Stand der Technik

Die Erfindung geht aus von einer Blockierschutzbremsanlage nach der Gattung des Hauptanspruchs. Durch die US-PS 4 033 637 ist eine Blockierschutzbremsanlage bekannt, zu deren ersten Bremskreis eine Bremsdruckmodulationsventilanordnung, ein Druckmittelaufnahmespeicher und eine Rückförderpumpe gehören. Zum zweiten Bremskreis gehört eine Schwimmkolbenanordnung. Diese enthält zwei Zylinder, einen Druckmodulationskolben, der mit Bremsdruck des ersten Bremskreises zum Modulieren des Bremsdrucks in Radbremsen des zweiten Bremskreises beaufschlagt wird, ein von dem Druckmodulationskolben gesteuertes Sperrventil und einen Sicherheitskolben, der bei Ausfall des ersten Bremskreises den Druckmodulationskolben in seiner Grundstellung und dadurch das Sperrventil geöffnet hält. Während Bremsungen ohne Blockiergefahr bleiben beide Kolben in ihren Grundstellungen. Dies kann dazu führen, daß, wenn nach längerer Nichtbenutzung ein Blockierschutzfall eintritt, der Druckmodulationskolben in seiner Bremsdruckabsenkstellung hängen bleibt. Um dennoch den Radbremsen des zweiten Brems kreises vom Hauptzylinder aus Bremsdruck zuführen zu können, ist in Bypaßanordnung zum Sperrventil ein als Überdruckventil ausgebildetes Sicherheitsventil angeordnet. Dieses Sicherheitsventil soll im Blockierschutzfall ein möglichst hohes Druckgefälle zwischen dem Hauptzylinder und den Radbremsen möglich machen. Die Erfüllung dieser Aufgabenstellung hat jedoch den Nachteil, daß im Notbremsfall, wenn also das vom Druckmodulationskolben gesteuerte Sperrventil geschlossen ist, der Notbremsdruck in den Radbremszylindern wesentlich geringer als der im Hauptzylinder erzeugte Druck ist. Infolgedessen ist im Notbremsfall ein sehr großer Hauptzylinderdruck erforderlich, der gegebenenfalls mittels eines Bremspedals allein nicht mehr erzeugbar ist.

Vorteile der Erfindung

Die erfindungsgemäße Blockierschutzbremsanlage mit den kennzeichnenden Merkmalen des Anspruchs 1 hat den Vorteil, daß ihre Schwimmkolbenanordnung einfacher herstellbar ist und betriebssicherer arbeitet, weil deren Kolben bei jedem Bremsvorgang verschoben werden und dadurch gängig bleiben. Ein teueres Sicherheitsventil, das beim Stand der Technik notwendig ist und die Bremswege im Notbremsfall nachteilig verlängert, ist nicht vorhanden.

Durch die in den Unteransprüchen aufgeführten Maßnahmen sind vorteilhafte Weiterbildungen und Verbesserungen der im Hauptanspruch angegebenen Blockierschutzbremsanlage möglich. Die kennzeichnenden Merkmale des Anspruchs 2 sowie die kennzeichnenden Merkmale der auf diesen Anspruch zurückbezogenen Unteransprüche 3, 4 und 5 geben Ausführungsbeispiele an, wie eine Nachfüllung, Entlüftung und ein Druckausgleich bei Radbremsen des zweiten Bremskreises alternativ realisierbar sind. Die Weiterbildung mit den kennzeichnenden Merkmalen des Anspruchs 6 hat den Vorteil, daß bei Bremsdruckabsenkungen im ersten Bremskreis Bremsbeläge, die zu Radbremsen des zweiten Bremskreises gehören, angelegt bleiben, so daß bei Wiedererhöhung von Bremsdrücken die Bremswirkung an den Radbremsen des zweiten Bremskreises sofort eintritt, was vorteilhaft kurze Bremswege bewirkt. Die kennzeichnenden Merkmale des Anspruchs 7 und die kennzeichnenden Merkmale der auf diesen zurückbezogenen Ansprüche 8 und 9 ergeben ebenfalls den Vorteil, daß Bremsbeläge der Radbremsen des zweiten Bremskreises im Blockierschutzfall angelegt bleiben mit der Folge kürzerer Bremswege. Die Weiterbildung mit den kennzeichnenden Merkmalen des Anspruchs 10 hat den Vorteil, daß beispielsweise die Bremsdrücke in allen Radbremsen unabhängig voneinander absenkbar und wieder auf ihre ursprünglichen Werte erhöhbar sind.

Die Blockierschutzbremsanlage mit den kennzeichnenden Merkmalen des Anspruchs 11 hat den Vorteil, daß trotz des einfachen Aufbaus der Bremsanlage relativ kurze Bremswege bei ausreichend guter Spurhaltung des Fahrzeugs erreichbar sind. Die kennzeichnenden Merkmale des Anspruchs 11 sind auch anwendbar bei Schwimmkolbenanordnungen, die nicht die kennzeichnenden Merkmale des Anspruchs 1 aufweisen.

Die kennzeichnenden Merkmale des Anspruchs 12 haben den Vorteil, daß nach einer Bremsdruckabsenkung zur Erreichung möglichst kurzer Bremswege das Steuergerät prüft, ob durch Erhöhen von Bremsdrücken eine Verkürzung der Bremswege möglich ist. Dies ist besonders vorteilhaft, wenn eine Fahrbahn nur bereichsweise naß, - schneeglatt oder vereist ist. Eine solche Bremsanlage hat auch Vorteile, wenn ein mit ihr aus gerüstetes Fahrzeug einen Frontantrieb besitzt, dessen Schleppmoment gegebenenfalls störend wirkt. Die kennzeichnenden Merkmale des Anspruchs 13 haben die Vorteile einer verbesserten Spurhaltung des Fahrzeugs beim Bremsen in Kurven. Die kennzeichnenden Merkmale des Anspruchs 14 sorgen für kurze Bremswege dann, wenn die Räder von lediglich einer Fahrzeugseite auf einem Streifen mit schlechter Griffigkeit bewegt werden. Dies ist beispielsweise der Fall bei am Straßenrand befindlichen Pfützen und Vereisungen.

Zeichnung

Vier Ausführungsbeispiele der erfindungsgemäßen Blockierschutzbremsanlage sind in der Zeichnung dargestellt und nachfolgend näher erläutert. Es zeigen Figur 1 ein erstes Ausführungsbeispiel der erfindungsgemäßen Blockierschutzbremsanlage, Figur 2 ein zweites Ausführungsbeispiel der erfindungsgemäßen Bremsanlage, Figure 3 ein drittes Ausführungsbeispiel und Figur 4 ein viertes Ausführungsbeispiel, das eine Weiterbildung des ersten Ausführungsbeispiels beinhaltet.

Beschreibung der Ausführungsbeispiele

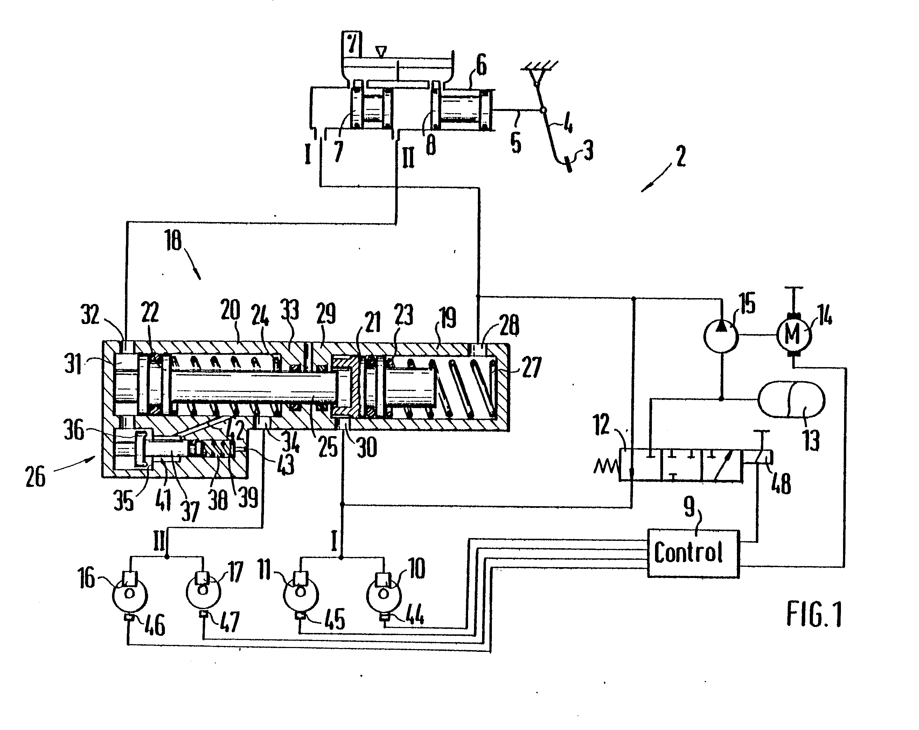

Die Blockierschutzbremsanlage 2 gemäß der Figur 1 hat einen mittels eines Bremspedals 3 über einen Bremspedalhebel 4 und einen Stößel 5 betätigbaren zweikreisigen Hauptzylinder 6 mit zwei Hauptzylinderkolben 7 und 8, einen Bremskreis I, einen Bremskreis II und ein Steuergerät 9. Zum Bremskreis I gehören zwei Radbremsen 10, 11 von denen die eine eine Vorderradbremse und die andere eine diagonal gegenüberliegende Hinterradbremse sein kann, eine Bremsdruckmodulationsventilanordnung 12, ein Druckmittelspeicher 13 und eine von einem Motor 14 antreibbare Rückförderpumpe 15.

Der Bremskreis II enthält zwischen dem Hauptzylinder 6 und Radbremsen 16, 17, von denen eine als Vorderradbremse und die andere als diagonal gegenüberliegende Hinterradbremse ausgebildet sein kann, eine Schwimmkolbenanordnung 18. Diese Schwimmkolbenanordnung 18 besitzt einen ersten Zylinder 19, einen zweiten Zylinder 20, einen ersten Kolben 21, einen zweiten Kolben 22, eine erste Rückstellfeder 23, eine zweite Rückstellfeder 24 und eine Druckstange 25. Der Schwimmkolbenanordnung 18 ist ein druckabhängig schaltbares Ventil 26 zugeordnet.

An einem Anfang 27 des ersten Zylinders 19 ist ein Anschluß 28 angeordnet, der mit dem Bremskreis I und dessen Teil des Hauptzylinders 6 verbunden ist, so daß mittels des Hauptzylinderkolbens 7 erzeugter Druck in den Zylinder 19 gelangt. Ein Ende 29 des ersten Zylinders 19 hat einen weiteren Anschluß 30, der mit den Radbremsen 10 und 11 des ersten Bremskreises verbunden ist. Der Kolben 21 ist in dem ersten Zylinder 19 längsverschiebbar. Die Rückstellfeder 23 stützt sich an dem Anfang 27 des Zylinders 19 ab und drückt den Kolben 21 in Richtung des Endes 29 in eine Grundstellung.

Der zweite Zylinder 20 hat ebenfalls einen Anfang 31 mit einem Anschluß 32, der mit dem zum Bremskreis II gehörenden Teil des Hauptzylinders 6 verbunden ist. Mittels des Hauptzylinderkolbens 8 erzeugbarer Druck wird deshalb durch den Anschluß 32 hindurch in dem zweiten Zylinder 20 wirksam. Der Zylinder 20 hat ebenfalls ein Ende 33, bei dem sich ein weiterer Anschluß 34 befindet. Dieser Anschluß 34 ist mit den Radbremsen 16 und 17 verbunden. Der Kolben 22 ist in dem zweiten Zylinder 20 verschiebbar, und seine Rückstellfeder 24 stützt sich an dem Ende 33 ab und drückt den Kolben 22 zum Anfang 31. Im dargestellten Beispiel ist die Druckstange 25 an dem Kolben 22 befestigt oder mit diesem einstückig ausgebildet. Dabei ist vorzugsweise die Länge der Druckstange 25 so gewählt, daß dann, wenn beide Kolben 21 und 22 in ihren Grundstellungen ruhen, ein Abstand zwischen der Druckstange 25 und dem Kolben 21 vorhanden ist für einen Leerhub L.

Das druckabhängig schließbare Ventil 26 hat einen Ventilsitz 35, ein zugeordnetes Schließelement 36, einen Schließkolben 37, einen Schließzylinder 38 und eine Öffnungsfeder 39 sowie eine Ventilkammer 40, in der sich der Ventilsitz 35 befindet und das Schließelement 36 beweglich ist. Die Ventilkammer 40 ist im Bereich des Anschlusses 32 mit dem Anfang 31 des zweiten Zylinders 20 verbunden. An den Ventilsitz 35 schließt sich ein Ventilausgang 41 an, der über einen Verbindungskanal 42 mit dem Anschluß 34 am Ende 33 des Zylinders 20 kommuniziert. In der Verlängerung des Schließzylinders 38 ist eine Entlastungsöffnung 43 vorgesehen, in der der Umgebungsluftdruck herrscht.

Den Radbremsen 10, 11 und 16, 17 sind Raddrehungssensoren 44, 45, 46 und 47 zugeordnet. Diese sind mit dem Steuergerät 9 verbunden. An das Steuergerät 9 ist ein Elektromagnet 48 der Bremsdruckmodulationsventilanordnung 12 angeschlossen. Diese Bremsdruckmodulationsventilanordnung 12 ist zweckmäßigerweise als ein 3/3-Wegeventil ausgebildet, das mittels zweier unterschiedlicher Stromstärken aus seiner dargestellten Grundstellung in eine erste und zweite Steuerstellung steuerbar ist. Außerdem ist an das Steuergerät 9 der Motor 14 für die Rückförderpumpe 15 angeschlossen. Die Blockierschutzbremsanlage 2 funktioniert in der folgend beschriebenen Weise.

Bei einer Betätigung des Bremspedals 3 wird über den Bremspedalhebel 4 und den Stößel 5 der Hauptzylinderkolben 8 verschoben. Der Hauptzylinderkolben 8 erzeugt einen Bremsdruck, der auf den Hauptzylinderkolben 7 wirkt und sich auch in den Bremskreis II fortpflanzt. Dieser Bremsdruck gelangt durch den Anschluß 32 in den zweiten Zylinder 20 und von dort aus, so lange dieser Bremsdruck niedrig ist, durch das druckabhängig - schließbare Ventil 26 und den Verbindungskanal 42 zum anderen Anschluß 34 und von dort zu den Radbremsen 16 und 17. Der auf dem Hauptbremskolben 7 lastende Druck erzeugt Bremsdruck für den Bremskreis I, der durch die in ihrer Grundstellung befindliche Bremsdruckmodulationsventilanordnung 12 sowohl zu den Radbremsen 10 und 11 als auch zu dem Anschluß 30 und dadurch in den ersten Zylinder 19 gelangt. Der vom Hauptzylinderkolben 7 erzeugte Bremsdruck gelangt aber auch zum Anschluß 28 des ersten Zylinders 19, so daß in der beschriebenen Grundstellung der Bremsdruckmodulationsventilanordnung 12 der Kolben 21 von beiden Seiten her mit dem gleichen Druck beaufschlagt wird.

So lange wie der mittels des Bremspedals 3 im Hauptzylinder 6 erzeugte Druck niedrig genug ist, bleibt das druckabhängig schließbare Ventil 26 geöffnet. Wenn nun die Betätigung des Bremspedals 3 verstärkt wird, so wachsen in den Radbremsen 10, 11 16 und 17 Drücke soweit an, daß sich nicht dargestellte Bremsbeläge an nicht dargestellte Bremsscheiben oder Bremstrommeln dieser Radbremsen anlegen. Dabei befinden sich die beiden Kolben 21 und 22 immer noch in ihren Grundstellungen, die in der Figur 1 dargestellt sind. Die Öffnungskraft der Öffnungsfeder 39 ist so gewählt, daß bei weiter ansteigender Betätigungskraft am Bremspedal 3 der in der Ventilkammer 40 herrschende Druck den Schließkolben 37 gegen die Öffnungsfeder 39 verschiebt und dadurch das Schließelement 36 dichtend an den Ventilsitz 35 anlegt. Infolgedessen wird eine bis dahin vorhandene Umströmungsmöglichkeit um den Kolben 22 unterbrochen, so daß bei weiter steigender Betätigungskraft am Bremspedal 3 der Kolben 22 in Richtung des Endes 33 verschoben wird und durch den Anschluß 34 hindurch Druckmittel zu den Radbremsen 16 und 17 drängt, wodurch in diesen die Drücke abermals steigen. Gleichzeitig steigen auch durch die Bremsdruckmodulationsventilanordnung 12 hindurch die Drücke in den Radbremsen 10 und 11 an. Infolge der Verschiebung des Kolbens 22 drückt die Druckstange 25 gegen den Kolben 21 und verschiebt diesen gegen die Kraft der Rückstellfeder 23. Weil die Bremsdruckmodulationsventilanordnung 12 in ihrer Grundstellung einen Bypaß um den Kolben 21 bildet, wird die Verschiebung des Kolbens 21 nicht vom Druckmittel behindert.

Während Bremsungen melden die Raddrehungssensoren 44 bis 47 Raddrehwinkel an das Steuergerät 9. Dieses Steuergerät ermittelt anhand der gemeldeten Raddrehwinkel, ob eine Überbremsung eines oder mehrerer den Raddrehungssensoren zugeordneter Räder stattfindet. Überbremsung der Räder bedeutet Radblockiergefahr, die zumindest an denjenigen Rädern zu unterbinden ist, die für eine Spurhaltung des Fahrzeugs während des Bremsens notwendig sind. Aus diesem Grund ist das Steuergerät 9 derart eingerichtet und, falls es einen für Steuerungsaufgaben verwendeten Digitalrechner enthält, so programmiert, daß ein Bremsdruckabsenkbefehl an den Elektromagnet 48 der Bremsdruckmodulationsventilanordnung 12 gelangt, wenn ein Vorderrad überbremst ist, wenn beide Vorderräder überbremst sind, wenn beide Hinterräder überbremst sind oder wenn beide Vorderräder und ein Hinterrad überbremst sind. Das Steuern der Bremsdruckmodulationsventilanordnung 12 ihre Bremsdruckabsenkstellung und das gleichzeitige Einschalten, das ebenfalls von dem Steuergerät 9 vorgenommen wird, des Motors 14 der Rückförderpumpe 15 bewirken, daß den Radbremsen 10 und 11 und dem Anschluß 30 des Zylinders 19 Druckmittel entnommen und zum Hauptzylinder 6 und zu dem Anschluß 28 des Zylinders 19 gepumpt wird. Infolgedessen vermindern sich Radbremskräfte an den Radbremsen 10 und 11, so daß deren Räder beschleunigt werden. Das zu dem Anschluß 28 gepumpte Druckmittel wirkt in gleicher Richtung wie die Kraft der Rückstellfeder 23 auf den ersten Kolben 21. Weil gleichzeitig auf der gegenüberliegenden Seite des Kolbens 21 dessen Beaufschlagung in gleicher Weise wie der Bremsdruck in den Radbremsen 10 und 11 absinkt, entsteht am Kolben 21 eine Verschiebekraft, die über die Druckstange 25 an dem Kolben 22 angreift und diesen in Richtung des Anschlusses 32 verschiebt. Infolgedessen wird der Kolben 32 durch den Anschluß 32 hindurch Druckmittel zum Hauptzylinder 6 drängen. Gleichzeitig strömen Druckmittelmengen aus den Radbremsen 16 und 17 hinter dem Kolben 22 her, so daß auch in den Radbremsen 16 und 17 die Bremsdrücke in gewünschter Weise sinken.

Liegt der Fall vor, daß zunächst alle Räder überbremst sind und durch eine vorstehend beschriebene Bremsdruckabsenkung lediglich die Hinterräder zu greifen beginnen, während die Vorderräder noch überbremst bleiben, dann steuert das Steuergerät 9 den im Hauptzylinder 6 herrschenden Druck für eine vorwählbare Zeitspanne in die Radbremsen 10 und 11 und über die Schwimmkolbenanordnung 18 auch in die Radbremsen 16 und 17. Dies führt zu einer Erhöhung der Bremskraft, wenn beispielsweise beide Vorderräder in Wasserpfützen gekommen sind und deshalb kurzzeitig keine griffigen Kontakte mit der Fahrbahn haben. Diese Art der vorübergehenden Druckerhöhung ist auch dann vorteilhaft, wenn die Überbremsung der Vorderräder beispielsweise beim Überfahren von Pfützen durch das Schleppmoment eines Frontantriebmotors bedingt waren.

Zusätzlich oder alternativ kann das Steuergerät 9 auch noch so eingerichtet und/oder progammiert sein, daß es nach einer von ihm gesteuerten Bremsdruckabsenkung den Bremsdruck langsam steigert, wenn es erkennt, daß zwei Räder einer Fahrzeugseite zwar überbremst sind, daß aber zwei andere Räder, die zur anderen Fahrzeugseite gehören, nicht genügend gebremst sind, weil sie auf einer sehr griffigen Spur rollen. Diese Ausbildung bzw. Programmierung des Steuergeräts 9 bewirkt sehr kurze Bremswege in dem Fall, daß die Räder der zum Straßenrand hin liegenden Fahrzeugseite über Glatteis oder tiefe Wasserpfützen geführt werden. Die angesprochene Bremsdruckerhöhung wird langsam vorgenommen, damit der Fahrer genügend Zeit hat, gegebenenfalls infolge von auftretenden Giermomenten notwendige Lenkkorrekturen rechtzeitig ausführen zu können.

Weil die beschriebene Blockierschutzbremsanlage 2 aufgrund ihres einfachen Aufbaus vorzugsweise zum Einbau in mit Frontantrieben versehene Fahrzeuge der unteren Preisklasse bestimmt ist, kann ein Ausführungsbeispiel des Steuergerätes 9 auch so eingerichtet und/oder so progammiert sein, daß es nach einer von ihm gesteuerten Bremsdruckabsenkung, die zum Beseitigen der Radblockiergefahr an beiden Vorderrädern und einem Hinterrad ausgereicht hat, eine Bremsdruckerhöhung bewirkt, bis eines der beiden Vorderräder wieder überbremst wird. Bei Fahrzeugen der angesprochenen Kategorie tritt nämlich der Umstand, daß ein kurveninneres Hinterrad überbremst wird, besonders ausgeprägt auf. Die Überbremsung ist meist eine Folge von Fliehkraftangriff an einen relativ hoch liegenden Fahrzeugschwerpunkt und von relativ kurzen Achsentfernungen. Die Überbremsung eines Hin terrades und die dadurch verschlechterte Spurhaltung hinten bewirken ein Störmoment um die Hochachse des Fahrzeugs, so daß es schwierig wäre, dies längs einer vorgeschriebenen Bahn zu lenken. Infolgedessen wird eine Verminderung der Führungskraft des kurveninneren Hinterrades durch den genannten langsamen Bremsdruckanstieg und die dadurch verminderte Spurhaltekraft des kurveninneren Vorderrades in etwa ausgeglichen.

Anstelle der als ein 3/3-Wegeventil dargestellten Bremsdruckmodulationsventilanordnung 12 könnte natürlich auch eine aus dem Stand der Technik entnehmbare Bremsdruckmodulationsventilanordnung aus zwei separaten 2/2-Wegeventilen eingebaut werden.

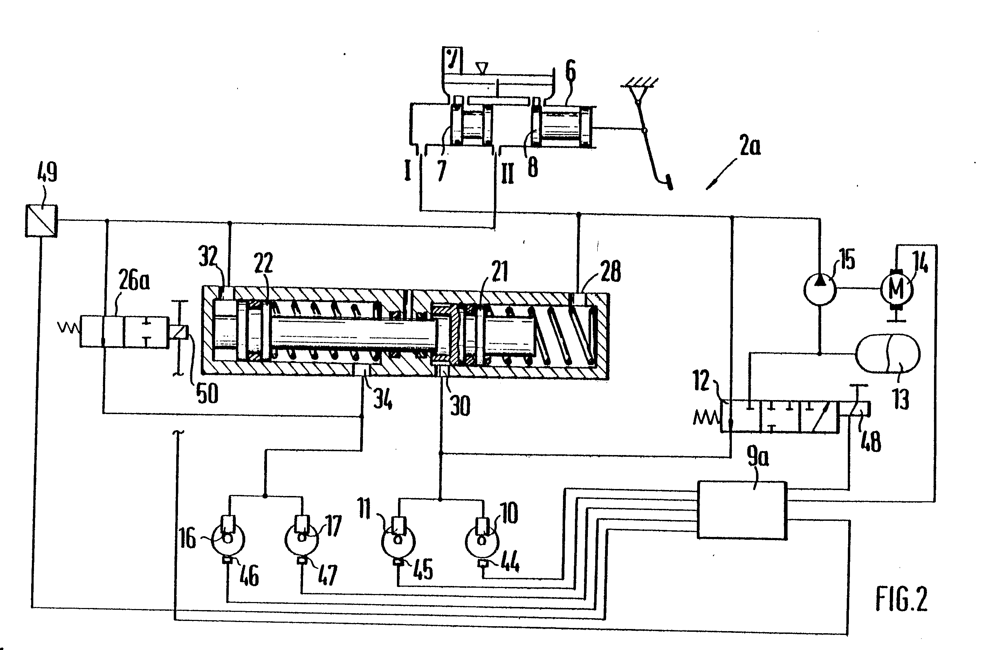

Das zweite Ausführungsbeispiel einer Blockierschutzbremsanlage 2a gemäß der Figur 2 unterscheidet sich im wesentlichen dadurch von dem Ausführungsbeispiel gemäß der Figur 1, daß anstelle des durch hydraulischen Druck sperrbaren Ventils 26 ein elektromagnetisch steuerbares Ventil 26a eingebaut ist. Damit dieses Ventil 26a ebenfalls in Abhängigkeit von dem im Hauptzylinder 6 herrschenden Druck steuerbar ist, ist an den Hauptzylinder 6 ein Druckfühler 49 angeschlossen. Ein Steuergerät 9a ist gegenüber dem Steuergerät 9 des ersten Ausführungsbeispiels so weitergebildet, daß es elektrische Anzeigen aus dem Druckfühler 49 auswerten kann zum Sperren des Ventils 26a mittels eines diesem zugeordneten Elektromagnets 50. Wie aus der Beschreibung ersichtlich ist, ist das Ventil 26a in seiner Grundstellung geöffnet. Dadurch ist es beispielsweise möglich, durch das Ventil 26a hindurch die Radbremsen 16 und 17 des Bremskreises II zu entlüften.

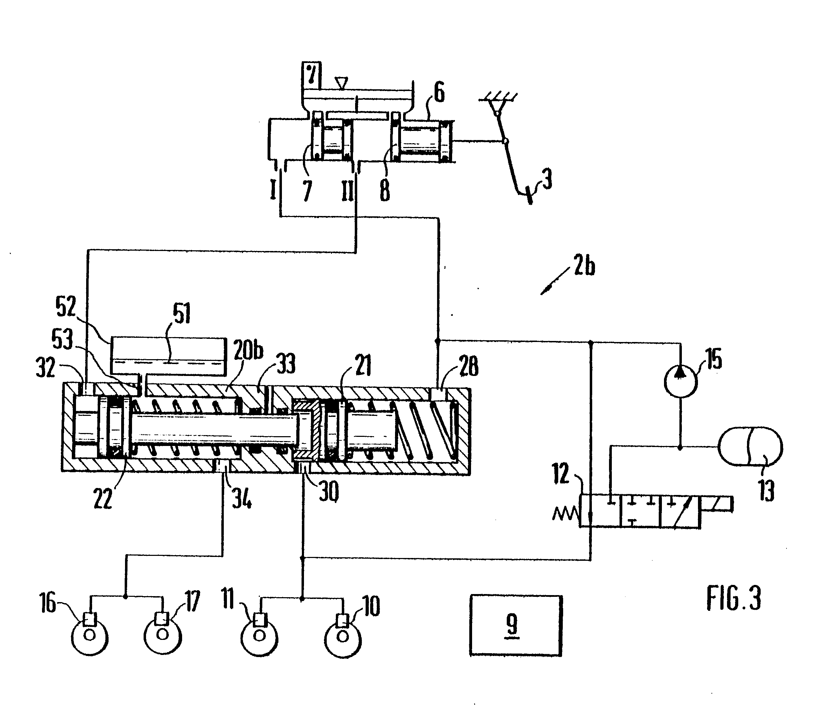

Ein weiteres Ausführungsbeispiel der Blockierschutzbremsanlage 2b gemäß der Figur 3 benötigt keine sperrbaren Ventile 26 bzw. 26a der zuerst beschriebenen beiden Ausführungsbeispiele, denn der Zylinder 20b hat einen ein Druckmittel 51 bevorratenden Druckausgleichsbehälter 52, der über eine als Schnüffelbohrung 53 ausgebildete Verbindung das Druckmittel 51 für die Radbremsen 16 und 17 liefert. Die Schnüffelbohrung 53 ist relativ zum Anschluß 34 des Zylinders 22b so angeordnet, daß der Druckausgleichbehälter 52 mit diesem Anschluß 34 kommuniziert, wenn sich der Kolben 22 in seiner Grundstellung befindet. Wird das Bremspedal 3 betätigt, so daß im Hauptzylinder 6 Druck erzeugt wird, so schiebt dieser Druck den Kolben 22 in Richtung zum Anschluß 34, wobei der Kolben 22 die Schnüffelbohrung 53 überfährt. Sobald die Schnüffelbohrung 53 überfahren ist, entsteht vor dem Kolben 22 Bremsdruck, der sich durch den Anschluß 34 hindurch zu den Radbremsen 16 und 17 fortpflanzt. Ein Entlüften der Radbremsen 16 und 17 ist also möglich unter Verwendung des Druckmittels 51, das sich im Druckausgleichbehälter 52 befindet. Die Bremsdruckmodulationsventilanordnung 12, der Druckmittelspeicher 13 und die Rückförderpumpe 15 sind den ersten beiden Ausführungsbeispielen entnommen, so daß sich eine weitere Beschreibung erübrigt. Das Steuergerät 9 entspricht der Ausführungsform des ersten Ausführungbeispiels und steuert in der bereits beschriebenen Weise die Bremsdruckabsenkungen und Wiedererhöhungen der Bremsdrücke.

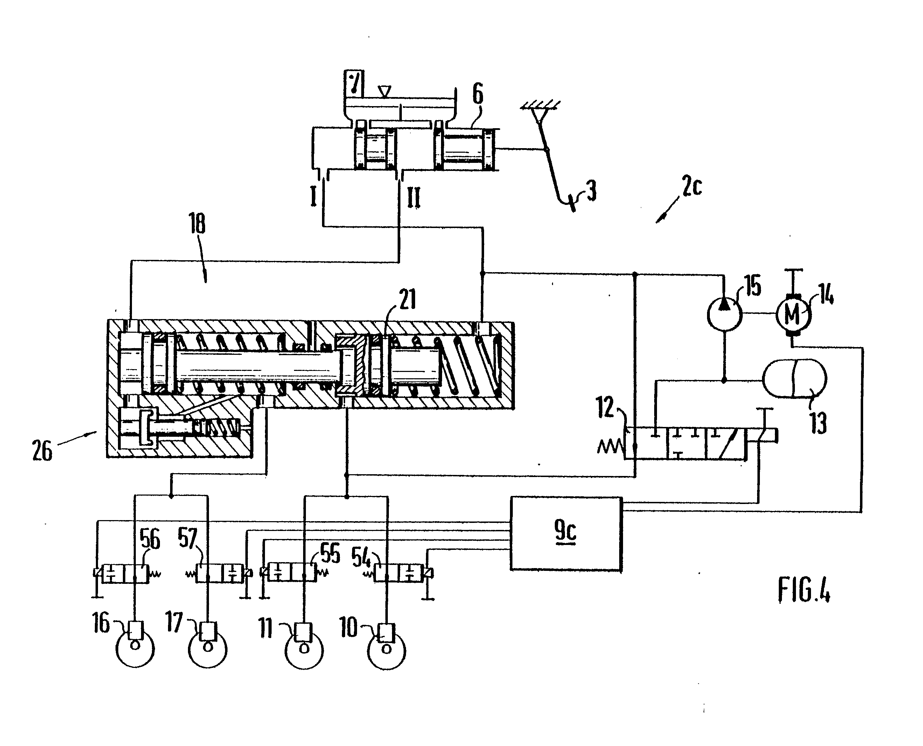

Beim vierten Ausführungsbeispiel einer Blockierschutzbremsanlage 2c stimmen der Hauptzylinder 6, die Bremsdruckmodulationsventilanordnung 12, der Druckmittelspeicher 13, die Rückförderpumpe 15, die Schwimmkolbenanordnung 18, das Ventil 26, die Radbremsen 10, 11, 16, 17 mit dem ersten Ausführungsbeispiel überein. Jedoch enthält die Blockierschutz bremsanlage 2c gemäß der Figur 4 zusätzlich Sperrventile 54, 55, 56 und 57, die in den Bremskreisen I und II den Radbremsen 10, 11, 16 bzw. 17 vorgeordnet sind. Ein Steuergerät 9c ist derart weitergebildet, daß es diese Sperrventile 54 bis 57 aus ihren Grundstellungen, in denen sie geöffnet sind, in ihre Sperrstellungen steuern kann. Mittels der Sperrventile 54 bis 57 können Bremsdrücke in solchen Radbremsen, deren Räder nicht überbremst sind, konstant gehalten werden, während durch Offenhalten des der Sperrventile und Ansteuerung des Bremsdruckmodulationsventilanordnung 12 Bremsdrücke in den Radbremsen abgesenkt werden können, die ihre Räder zu stark abbremsen. Durch die Anordnung der Sperrventile 54 bis 57 wird deshalb eine preisgünstige Blockierschutzbremsanlage gemäß der Figur 1 weitergebildet zu einer vierkanalig arbeitenden Blockierschutzbremsanlage. Ergänzend wird noch darauf hingewiesen, daß mittels der Ventile 54 bis 57 auch die Ausführungsbeispiele gemäß den Figuren 2 und 3 zu beispielsweise vierkanaligen Blockierschutzbremsanlagen weitergebildet werden können. Eine nicht dargestellte Zwischenlösung zwischen dem Ausführungseispiel gemäß der Figur 1 und dem Ausführungsbeispiel gemäß der Figur 4 hat lediglich jeweils ein solches Sperrventil vor den Radbremsen eines Bremskreises, so daß sich eine preiswertere Lösung ergibt. Beispielsweise kann man einem Sperrventil eine Vorderradbremse und eine diagonal gegenüberliegende Hinterradbremse zuordnen. Andererseits ist es aber auch möglich, in an sich bekannter Weise an ein solches Sperrventil ein Paar Vorderradbremsen oder ein Paar Hinterradbremsen anzuschließen.

## Ansprüche

1. Blockierschutzbremsanlage mit einem zweikreisigen Hauptzylinder, mit einem ersten Bremskreis, zu dem eine Bremsdruckmodulationsventilanordnung und eine Rückförderpumpe gehören, und mit einem zweiten Bremskreis, der eine im Blockierschutzfall den Bremsdruck absenkende Schwimmkolbenanordnung hat, die vom Bremsdruck des ersten Bremskreises gesteuert wird und zwei in zwei gleichachsig ausgerichteten Zylindern verschiebbare Kolben sowie eine zwischen den Kolben angeordnete Druckstange aufweist, dadurch gekennzeichnet, daß

a) der erste Zylinder (19) der Schwimmkolbenanordnung (18) einen Anfang (27) hat, der mit einem dem ersten Bremskreis (I) zugeordneten Hauptzylinderanschluß kommuniziert, und ein Ende (29) hat, das mit den zum ersten Bremskreis (I) gehörenden Radbremsen (10, 11) kommuniziert, und eine Rückstellfeder (23) enthält, die den Kolben (21) zu seinem Ende (29) schiebt,

b) die Bremsdruckmodulationsventilanordnung (12) in ihrer offenen Grundstellung einen Bypaß um den ersten Zylinder (19) legt und dabei dessen Anfang (27) mit seinem Ende (29) verbindet,

c) der zweite Zylinder (20) ein Ende (33) hat, das gegen das Ende (29) des ersten Zylinders (19) gerichtet ist und mit den Radbremsen (16, 17) des zweiten Bremskreises (II) kommuniziert, und einen Anfang (31) besitzt, der mit einem zum zweiten Bremskreis (II) gehörenden Anschluß des Hauptzylinders (6) verbunden ist, und eine Rückstellfeder (24) enthält, die den Kolben (22) zum Anfang (31) dieses Zylinders (20) schiebt.

2. Blockierschutzbremsanlage nach Anspruch 1, dadurch gekennzeichnet, daß eine Druckausgleicheinrichtung (26, 26a, 52, 53) vorgesehen ist, die bei unbetätigtem Hauptzylinder (6) und in ihren Grundstellungen befindlichen Kolben (21, 22) den Druck der Radbremsen (16, 17) des zweiten Bremskreises (II) zumindest an den Druck im Hauptzylinder (6) angleicht.

3. Blockierschutzbremsanlage nach Anspruch 2, dadurch gekennzeichnet, daß die Druckausgleicheinrichtung aus einem elektrisch schließbaren Ventil (26a) besteht, das in seiner Grundstellung geöffnet ist und dabei außerhalb des zweiten Zylinders (20) dessen Anfang (31) mit seinem Ende - (33) verbindet.

4. Blockierschutzbremsanlage nach Anspruch 2, dadurch gekennzeichnet, daß die Druckausgleicheinrichtung aus einem hydraulisch steuerbaren Ventil (26) besteht, das in seiner Grundstellung geöffnet ist und dabei einen vom Hauptzylinderteil des zweiten Bremskreises zu dessen Radbremsen (16, 17) führenden, den Kolben (22) des zweiten Zylinders (20) umgehenden Bypaß bildet und mit Druck aus dem Hauptzylinder (6) schließbar ist.

5. Blockierschutzbremsanlage nach Anspruch 2, dadurch gekennzeichnet, daß die Druckausgleicheinrichtung einen Druckmittel (51) bevorratenden Ausgleichbehälter (52) und eine in der Grundstellung des Kolbens (22) offene Verbindung (53) mit jenem Teil des zweiten Zylinders (20b) aufweist, an dessen Ende (33) die Radbremsen (16, 17) angeschlossen sind.

6. Blockierschutzbremsanlage nach einem der Ansprüche 1 bis 5, dadurch gekennzeichnet, daß die Druckstange (25) so lang ausgebildet ist, daß der mit Druck aus dem Hauptzylinder (6) beaufschlagte zweite Kolben (22) einen Leerhub (L) ausführt, bevor er über die Druckstange (25) gegen den ersten Kolben (21) wirkt.

7. Blockierschutzbremsanlage nach Anspruch 3 oder 4, dadurch gekennzeichnet, daß das Ventil - (26, 26a) so eingerichtet ist, daß es schließt, wenn der im Hauptzylinder (6) herrschende Druck eine Druckhöhe übersteigt, die zum Anlegen von Bremsbelägen an Bremsscheiben oder Bremstrommeln ausreicht.

8. Blockierschutzbremsanlage nach Anspruch 7, dadurch gekennzeichnet, daß das Ventil (26a) elektromagnetisch steuerbar ist, und daß dem Ventil (26a) ein an den Hauptzylinder (6) angeschlossener Druckfühler (49) zu dessen Steuerung zugeordnet ist.

9. Blockierschutzbremsanlage nach Anspruch 3 oder 4, dadurch gekennzeichnet, daß das Ventil - (26) mit Druck aus dem Hauptzylinder (6) hydraulisch schließbar ist.

10. Blockierschutzbremsanlage nach einem der Ansprüche 1 bis 7, dadurch gekennzeichnet, daß zwischen die Schwimmkolbenanordnung (18) und die Radbremsen (10, 11,16,17) Sperrventile (54, 55, 56, 57) eingebaut sind zum Konstanthalten von Bremsdrücken in wenigstens einer Radbremse, die keine Überbremsung bewirkt, während in wenigstens einer anderen Radbremse, die ein ihr zugeordnetes Rad überbremst, eine Bremsdruckabsenkung stattfindet.

11. Blockierschutzbremsanlage mit einer gleichzeitig auf alle Radbremsen wirkenden Bremsdruckmodulationsventilanordnung und einem diese steuernden Steuergerät, das über Raddrehungssensoren, die den Radbremsen zugeordnet sind, Raddrehzahlen überwacht und im Blockierschutzfall die Bremsdruckmodulationsventilanordnung steuert, insbesondere nach Anspruch 1, dadurch gekennzeichnet, daß das Steuergerät (9, 9a) so eingerichtet und/oder programmiert ist, daß es Bremsdruckabsenkungen steuert, wenn

a) alle Räder überbremst sind,

b) wenigstens ein Vorderrad überbremst ist,

c) zwei Vorderräder und ein Hinterrad überbremst sind,

d) zwei Hinterräder überbremst sind.

12. Blockierschutzbremsanlage mit einem Steuergerät nach Anspruch 11, dadurch gekennzeichnet, daß das Steuergerät so eingerichtet und/oder programmiert ist, daß es nach einer von ihm gesteuerten Druckabsenkung die Bremsdruckmodulationsventilanordnung (12) während einer vorbestimmten Zeitspanne in ihre Grundstellung zurücksteuert zum wenigstens teilweisen Angleichen des Bremsdrucks an den ursprünglichen Bremsdruck.

13. Blockierschutzbremsanlage nach Anspruch 11, dadurch gekennzeichnet, daß das Steuergerät - (9, 9a, 9c) so eingerichtet und/oder programmiert ist, daß es nach einer von ihm gesteuerten Bremsdruckabsenkung, die zur Unterbremsung beider Vorderräder und eines Hinterrades geführt hat, die Bremsdruckmodulationsventilanordnung (12) so lange in ihre Grundstellung steuert, bis ein Vorderrad überbremst wird.

14. Blockierschutzbremsanlage nach Anspruch 11, dadurch gekennzeichnet, daß das Steuergerät - (9, 9a, 9c) derart eingerichtet und/oder programmiert ist, daß es nach einer von ihm gesteuerten Bremsdruckabsenkung den Bremsdruck dann langsam steigert, wenn zwei Räder einer Fahrzeugseite überbremst und zwei Räder der anderen Fahrzeugseite unterbremst sind.

FIG.1

FIG.2

0 233 486

FIG.3

FIG.4